(19) Europäisches Patentamt
European Patent Office
Office européen des brevets

(11) EP 3 025 543 B1

(12) **EUROPEAN PATENT SPECIFICATION**

(45) Date of publication and mention of the grant of the patent:
**04.09.2019 Bulletin 2019/36**

(21) Application number: **14828838.4**

(22) Date of filing: **24.06.2014**

(51) Int Cl.:
***H04W 24/10*** *(2009.01)*
***H04W 16/28*** *(2009.01)*
***H04B 7/06*** *(2006.01)*
***H04L 12/26*** *(2006.01)*
***H04W 64/00*** *(2009.01)*

(86) International application number:
**PCT/KR2014/005563**

(87) International publication number:
**WO 2015/012492 (29.01.2015 Gazette 2015/04)**

(54) **METHOD FOR MEASURING MOBILITY OF UE FOR MULTI-ANTENNA BEAMFORMING IN WIRELESS COMMUNICATION SYSTEM**

VERFAHREN ZUR MESSUNG DER MOBILITÄT EINER BENUTZERVORRICHTUNG FÜR STRAHLFORMUNG MIT MEHREREN ANTENNEN IN EINEM DRAHTLOSKOMMUNIKATIONSSYSTEM

PROCÉDÉ POUR MESURER LA MOBILITÉ D'UN UE POUR LA FORMATION DE FAISCEAU MULTI-ANTENNES DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2013 US 201361858634 P**

(43) Date of publication of application:
**01.06.2016 Bulletin 2016/22**

(73) Proprietor: **LG Electronics Inc.**
**Seoul 150-721 (KR)**

(72) Inventors:
- **KANG, Jiwon**
  **Seoul 137-893 (KR)**
- **LEE, Kilbom**
  **Seoul 137-893 (KR)**
- **KO, Hyunsoo**
  **Seoul 137-893 (KR)**
- **CHUNG, Jaehoon**
  **Seoul 137-893 (KR)**

(74) Representative: **Katérle, Axel**
**Wuesthoff & Wuesthoff**
**Patentanwälte PartG mbB**
**Schweigerstraße 2**
**81541 München (DE)**

(56) References cited:
**EP-A1- 1 659 704**
**EP-A2- 2 506 610**
**WO-A1-2009/041759**
**WO-A1-2009/078529**
**WO-A1-2013/022392**
**CA-A1- 2 244 366**
**US-A1- 2009 225 716**
**US-A1- 2009 278 743**
**US-A1- 2013 022 142**
**US-A1- 2013 040 682**
**US-A1- 2013 057 432**
**US-B2- 7 558 575**

- **"3rd Generation Partnership Project; Technical Specification Group Radio Access Network; Evolved Universal Terrestrial Radio Access (E-UTRA); Radio Resource Control (RRC); Protocol specification (Release 11)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.1.0, 24 September 2012 (2012-09-24), pages 1-325, XP050649953, [retrieved on 2012-09-24]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- "3rd Generation Partnership Project; Technical Specification Group Radio Access Network; Evolved Universal Terrestrial Radio Access (E-UTRA); LTE Positioning Protocol (LPP) (Release 11)", 3GPP STANDARD; 3GPP TS 36.355, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.3.0, 29 June 2013 (2013-06-29), pages 1-118, XP050712008, [retrieved on 2013-06-29]
- "3rd Generation Partnership Project; Technical Specification Group Services and System Aspects; Universal Geographical Area Description (GAD) (Release 9)", 3GPP DRAFT; 23032-900, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 July 2013 (2013-07-23), XP050725703, Retrieved from the Internet: URL:http://www.3gpp.org/ftp/tsg_sa/WG2_Arch/Latest_SA2_Specs/Rel-9/ [retrieved on 2013-07-23]

## Description

[Technical Field]

The present invention relates to a wireless communication system, and more particularly, to a method for measuring mobility of a user equipment (UE) for multi-antenna beamforming in a wireless communication system and an apparatus therefor.

[Background Art]

As an example of a wireless communication system to which the present invention is applicable, a 3rd Generation Partnership Project (3GPP) Long Term Evolution (LTE) communication system will be schematically described.

FIG. 1 is a diagram showing a network structure of an Evolved Universal Mobile Telecommunications System (E-UMTS) as a wireless communication system. The E-UMTS is an evolved form of the UMTS and has been standardized in the 3GPP. Generally, the E-UMTS may be called a Long Term Evolution (LTE) system. For details of the technical specifications of the UMTS and E-UMTS, refer to Release 7 and Release 8 of "3rd Generation Partnership Project; Technical Specification Group Radio Access Network".

Referring to FIG. 1, the E-UMTS mainly includes a User Equipment (UE), base stations (or eNBs or eNode Bs), and an Access Gateway (AG) which is located at an end of a network (E-UTRAN) and which is connected to an external network. Generally, an eNB can simultaneously transmit multiple data streams for a broadcast service, a multicast service and/or a unicast service.

One or more cells may exist per eNB. The cell is set to use a bandwidth such as 1.25, 2.5, 5, 10, 15 or 20 MHz to provide a downlink or uplink transmission service to several UEs. Different cells may be set to provide different bandwidths. The eNB controls data transmission or reception of a plurality of UEs. The eNB transmits downlink (DL) scheduling information of DL data so as to inform a corresponding UE of time/frequency domain in which data is transmitted, coding, data size, and Hybrid Automatic Repeat and reQuest (HARQ)-related information. In addition, the eNB transmits uplink (UL) scheduling information of UL data to a corresponding UE so as to inform the UE of a time/frequency domain which may be used by the UE, coding, data size and HARQ-related information. An interface for transmitting user traffic or control traffic can be used between eNBs. A Core Network (CN) may include an AG, a network node for user registration of the UE, etc. The AG - manages mobility of a UE on a Tracking Area (TA) basis. One TA includes a plurality of cells.

WO 2013/022392 A1 discloses a technique that comprises that a connection request is received from a remote terminal of a radio communications system at a serving node of the radio communications system. Mobility information is requested from the remote terminal based on receiving the connection request. The requested mobility information is received from the remote terminal, and the requested connection is established with the remote terminal.

Further prior art can be found, for example, in WO 2009/041759 A1, which generally relates to a beam division multiple access system and method for a mobile communication system.

Although wireless communication technology has been developed up to Long Term Evolution (LTE) based on Wideband Code Division Multiple Access (WCDMA), the demands and the expectations of users and providers continue to increase. In addition, since other radio access technologies have been continuously developed, new technology evolution is required to secure high competitiveness in the future. Decrease in cost per bit, increase in service availability, flexible use of a frequency band, simple structure, open interface, suitable User Equipment (UE) power consumption and the like are required.

[Disclosure]

[Technical Problem]

An object of the present invention devised to solve the problem lies on a method for measuring mobility of a user equipment (UE) for multi-antenna beamforming in a wireless communication system and an apparatus therefor.

[Technical Solution]

The present invention provides a method according to claim 1 for, at a user equipment (UE), controlling a beam width for multi-antenna based beamforming in a wireless communication system; and a method according to claim 4 for, at a base station, controlling a beam width for multi-antenna based beamforming in a wireless communication system.

According to a further aspect of the present disclosure, a method for, at a user equipment (UE), reporting velocity information to a base station for multi-antenna based beamforming in a wireless communication system is disclosed. It includes receiving a predefined signal from the base station, calculating at least one piece of movement velocity information of a vertical beamforming direction movement velocity $v_w$ and horizontal beamforming direction movement velocity $v_x$ of the UE based on the predefined information, and reporting the at least one piece of movement velocity information to the base station, wherein the predefined signal is used to calculate a velocity $V_b$ of the UE in a direction of the base station.

The calculating the at least one piece of movement velocity information may include measuring an absolute movement velocity v of the UE and a vertical direction movement velocity $v_z$ of the UE, and calculating the at least one piece of movement velocity information of the vertical beamforming direction movement velocity $v_w$ and horizontal beamforming direction movement velocity $v_x$ of the UE based on the absolute movement velocity v, the vertical movement velocity $v_z$ and the velocity $V_b$ of the UE in the direction of the base station. When a ratio of a height difference between the base station and the UE to a distance between the base station and the UE is equal to or greater than a threshold, the vertical beamforming direction movement velocity $v_w$ of the UE may be equal to the vertical movement velocity $v_z$ of the UE.

The velocity $V_b$ of the UE in the direction of the base station is determined based on Doppler shift of the predefined signal or based on change in an arrival time of the predetermined signal to the UE.

The at least one piece of movement velocity information may be used to adjust a beam width for the UE by the base station.

In still another aspect of the present disclosure is a method for, at a base station, receiving velocity information from a user equipment (UE) for multi-antenna based beamforming in a wireless communication system is disclosed. It includes transmitting a predefined signal to the UE, receiving, from the UE, at least one piece of movement velocity information of a vertical beamforming direction movement velocity $v_w$ and horizontal beamforming direction movement velocity $v_x$ of the UE calculated based on the predefined information, and wherein the predefined signal is used to calculate a velocity $V_b$ of the UE in a direction of the base station.

The method may further include adjusting a beam width for the UE based on the at least one piece of movement velocity information.

[Advantageous Effects]

According to embodiments of the present invention, in a wireless communication system, it is possible to measure and report mobility, that is, velocity, of a UE to a base station for multi-antenna beamforming.

It will be appreciated by persons skilled in the art that that the effects that can be achieved through the present invention are not limited to what has been particularly described hereinabove and other advantages of the present invention will be more clearly understood from the following detailed description.

[Description of Drawings]

The accompanying drawings, which are included to provide a further understanding of the invention, illustrate embodiments of the invention and together with the description serve to explain the principle of the invention.

In the drawings:

FIG. 1 is a diagram showing a network structure of an Evolved Universal Mobile Telecommunications System (E-UMTS) as an example of a wireless communication system;
FIG. 2 is a diagram showing the structure of a radio frame used in a Long Term Evolution (LTE) system;
FIG. 3 is a diagram showing the configuration of a general multiple input multiple output (MIMO) communication system;
FIGs. 4 and 5 are diagrams showing the structure of a downlink reference signal in an LTE system supporting downlink transmission using four antennas;
FIG. 6 is a diagram showing a downlink DM-RS allocation example defined in the current 3GPP standard;
FIG. 7 is a diagram showing CSI-RS configuration #0 in a normal CP among downlink CSI-RS configurations defined in the current 3GPP standard;
FIG. 8 is a diagram illustrating an antenna tilting method;
FIG. 9 is a diagram showing comparison between an existing antenna system and an active antenna system;
FIG. 10 is a diagram showing an example of forming a UE-specific beam based on an active antenna system;
FIG. 11 is a diagram showing a two-dimensional beam transmission scenario based on an active antenna system;
FIG. 12 is a diagram showing comparison between an existing precoding scheme and a PD beamforming scheme;
FIG. 13 is a diagram showing comparison between an existing precoding scheme and a PD beamforming scheme to which adaptive beam width adjustment is applied;
FIG. 14 is a diagram showing an example of defining a measurement domain based on locations of a user equipment (UE) and a base station according to an embodiment of the present invention;

FIG. 15 is a diagram showing the case in which a base station performs horizontal beamforming according to an embodiment of the present invention;

FIG. 16 is a diagram showing the case in which a base station performs vertical beamforming according to an embodiment of the present invention; and

FIG. 17 is a block diagram showing a communication apparatus according to one embodiment of the present invention.

[Best Mode]

The configuration, operation and other features of the present invention will be understood by the embodiments of the present invention described with reference to the accompanying drawings. The following embodiments are examples of applying the technical features of the present invention to a 3rd Generation Partnership Project (3GPP) system.

Although, for convenience, the embodiments of the present invention are described using the LTE system and the LTE-A system in the present specification, the embodiments of the present invention are applicable to any communication system corresponding to the above definition. In addition, although the embodiments of the present invention are described based on a Frequency Division Duplex (FDD) scheme in the present specification, the embodiments of the present invention may be easily modified and applied to a Half-Duplex FDD (H-FDD) scheme or a Time Division Duplex (TDD) scheme.

In addition, in the present specification, the term "base station" may include a remote radio head (RRH), an eNB, a transmission point (TP), a reception point (RP), a relay, etc.

FIG. 2 is a diagram showing the structure of a radio frame used in a Long Term Evolution (LTE) system.

Referring to FIG. 2, the radio frame has a length of 10 ms ($327200 \times T_s$) and includes 10 subframes with the same size. Each of the subframes has a length of 1 ms and includes two slots. Each of the slots has a length of 0.5 ms ($15360 \times T_s$). $T_s$ denotes a sampling time, and is represented by $T_s=1/(15kHz \times 2048)=3.2552 \times 10^{-8}$ (about 33 ns). Each slot includes a plurality of OFDM symbols in a time domain, and includes a plurality of resource blocks (RBs) in a frequency domain. In the LTE system, one RB includes 12 subcarriers$\times$7(6) OFDM or SC-FDMA symbols. A Transmission Time Interval (TTI) which is a unit time for transmission of data may be determined in units of one or more subframes. The structure of the radio frame is only exemplary and the number of subframes included in the radio frame, the number of slots included in the subframe, or the number of OFDM symbols included in the slot may be variously changed.

Hereinafter, a Multiple-Input Multiple-Output (MIMO) system will be described. In the MIMO system, multiple transmission antennas and multiple reception antennas are used. By this method, data transmission/reception efficiency can be improved. That is, since a plurality of antennas is used in a transmitter or a receiver of a wireless communication system, capacity can be increased and performance can be improved. Hereinafter, MIMO may also be called "multi-antenna".

In the multi-antenna technique, a single antenna path is not used for receiving one message. Instead, in the multi-antenna technique, data fragments received via several antennas are collected and combined so as to complete data. If the multi-antenna technique is used, a data transfer rate may be improved within a cell region having a specific size or system coverage may be increased while ensuring a specific data transfer rate. In addition, this technique may be widely used in a mobile communication terminal, a repeater and the like. According to the multi-antenna technique, it is possible to overcome a limit in transmission amount of conventional mobile communication using a single antenna.

The configuration of the general multi-antenna (MIMO) communication system is shown in FIG. 3. $N_T$ transmission antennas are provided in a transmitter and $N_R$ reception antennas are provided in a receiver. If the multiple antennas are used in both the transmitter and the receiver, theoretical channel transmission capacity is increased as compared with the case where multiple antennas are used in only one of the transmitter or the receiver. The increase in the channel transmission capacity is proportional to the number of antennas. Accordingly, transfer rate is improved and frequency efficiency is improved. If a maximum transfer rate in the case where one antenna is used is $R_o$, a transfer rate in the case where multiple antennas are used can be theoretically increased by a value obtained by multiplying $R_o$ by a rate increase ratio $R_i$ as shown in Equation 1. Here, $R_i$ is the smaller of the two values $N_T$ and $N_R$.

Equation 1

$$R_i = \min(N_T, N_R)$$

For example, in a MIMO system using four transmit antennas and four reception antennas, it is possible to theoretically acquire a transfer rate which is four times that of a single antenna system. After the theoretical increase in the capacity of the MIMO system was proved in the mid-1990s, various technologies of substantially improving a data transmission rate have been actively developed up to now. In addition, several technologies are already applied to the various radio communication standards such as the third-generation mobile communication and the next-generation wireless local area network (LAN).

According to the researches into the MIMO antenna up to now, various researches such as researches into information theory related to the computation of the communication capacity of a MIMO antenna in various channel environments and multiple access environments, researches into the model and the measurement of the radio channels of the MIMO system, and researches into space-time signal processing technologies of improving transmission reliability and transmission rate have been actively conducted.

The communication method of the MIMO system will be described in more detail using mathematical modeling. As shown in FIG. 7, it is assumed that $N_T$ transmit antennas and $N_R$ reception antennas are present. In transmitted signals, if the $N_T$ transmit antennas are present, the number of pieces of maximally transmittable information is $N_T$. The transmitted information may be expressed by a vector shown in Equation 2.

Equation 2

$$\mathbf{s} = \left[s_1, s_2, \cdots, s_{N_T}\right]^T$$

The transmitted information $S_1,S_2,\cdots,S_{N_T}$ may have different transmit powers. If the respective transmit powers are $P_1,P_2,\cdots,P_{N_T}$, the transmitted information with adjusted powers may be expressed by a vector shown in Equation 3.

Equation 3

$$\hat{\mathbf{s}} = \left[\hat{s}_1, \hat{s}_2, \cdots, \hat{s}_{N_T}\right]^T = \left[P_1 s_1, P_2 s_2, \cdots, P_{N_T} s_{N_T}\right]^T$$

In addition, $\hat{\mathbf{S}}$ may be expressed using a diagonal matrix P of the transmit powers as shown in Equation 4.

Equation 4

$$\hat{\mathbf{s}} = \begin{bmatrix} P_1 & & & 0 \\ & P_2 & & \\ & & \ddots & \\ 0 & & & P_{N_T} \end{bmatrix} \begin{bmatrix} s_1 \\ s_2 \\ \vdots \\ s_{N_T} \end{bmatrix} = \mathbf{Ps}$$

Considers that the $N_T$ actually transmitted signals $x_1,x_2,\cdots,x_{N_T}$ are configured by applying a weight matrix W to the information vector $\hat{\mathbf{S}}$ with the adjusted transmit powers. The weight matrix serves to appropriately distribute the transmitted information to each antenna according to a transport channel state, etc. Such transmitted signals $x_1,x_2,\cdots,x_{N_T}$ may be expressed by using a vector X as shown in Equation 5. $W_{ij}$ denotes a weight between an i-th transmit antenna and j-th information. W is also called a weight matrix or a precoding matrix.

Equation 5

$$\mathbf{x} = \begin{bmatrix} x_1 \\ x_2 \\ \vdots \\ x_i \\ \vdots \\ x_{N_T} \end{bmatrix} = \begin{bmatrix} w_{11} & w_{12} & \cdots & w_{1N_T} \\ w_{21} & w_{22} & \cdots & w_{2N_T} \\ \vdots & & \ddots & \\ w_{i1} & w_{i2} & \cdots & w_{iN_T} \\ \vdots & & \ddots & \\ w_{N_T1} & w_{N_T2} & \cdots & w_{N_TN_T} \end{bmatrix} \begin{bmatrix} \hat{s}_1 \\ \hat{s}_2 \\ \vdots \\ \hat{s}_j \\ \vdots \\ \hat{s}_{N_T} \end{bmatrix} = \mathbf{W}\hat{\mathbf{s}} = \mathbf{WPs}$$

In general, the physical meaning of the rank of the channel matrix may be a maximum number of elements capable of transmitting different information via a given channel. Accordingly, since the rank of the channel matrix is defined as the smaller of the number of independent rows or columns, the rank of the matrix is not greater than the number of rows or columns. The rank rank(H) of the channel matrix H is mathematically expressed by Equation 6.

Equation 6

$$rank(\mathbf{H}) \leq \min(N_T, N_R)$$

In addition, different information transmitted using the MIMO technology is defined as "transmitted stream" or "stream". Such "stream" may be referred to as "layer". Then, the number of transmitted streams is not greater than the rank which is a maximum number capable of transmitting different information. Accordingly, the channel rank H is expressed by Equation 7.

Equation 7

$$\#\ of\ streams \leq rank(\mathbf{H}) \leq \min(N_T, N_R)$$

where, "# of streams" denotes the number of streams. It should be noted that one stream may be transmitted via one or more antennas.

There are various methods for associating one or more streams with several antennas. These methods will be described according to the kind of the MIMO technology. A method of transmitting one stream via several antennas is referred to as a spatial diversity method and a method of transmitting several streams via several antennas is referred to as a spatial multiplexing method. In addition, a hybrid method which is a combination of the spatial diversity method and the spatial multiplexing method may be used.

Meanwhile, in an LTE-A system which is a next-generation mobile communication system, in order to improve a data transfer rate, a Coordinated Multi Point (CoMP) transmission scheme which was not supported in the conventional standard will be supported. Here, the CoMP transmission scheme refers to a transmission scheme for performing communication with a UE by coordination between two or more eNBs or cells in order to improve communication performance between a UE located in a shadow region and an eNB (cell or sector).

The CoMP transmission scheme may be divided into a cooperative MIMO-based Joint Processing (JP) scheme through data sharing and a CoMP-Coordinated Scheduling/Coordinated Beamforming (CoMP-CS/CB) scheme.

In case of downlink, in the CoMP-JP scheme, a UE may instantaneously and simultaneously receive data from eNBs, each of which implements a CoMP transmission scheme, and combine the signals received from the eNBs so as to improve reception performance (Joint Transmission (JT)). In addition, a method of transmitting data from one of eNBs, each of which performs a CoMP transmission scheme, to a UE at a specific time may be considered (Dynamic Point Selection (DPS)).

In the CoMP-CS/CB scheme, a UE may instantaneously receive data from one eNB, that is, a serving eNB, through beamforming.

In case of uplink, in the CoMP-JP scheme, eNBs may simultaneously receive a PUSCH signal from a UE (Joint Reception (JR)). In the CoMP-CS/CB scheme, only one eNB receives a PUSCH. At this time, a determination as to whether a CoMP/CS-CB scheme is used is made by coordinated cells (or eNBs).

Now, a description of a Channel State Information (CSI) report is given. In the current LTE standard, a MIMO transmission scheme is categorized into open-loop MIMO operated without CSI and closed-loop MIMO operated based on CSI. Especially, according to the closed-loop MIMO system, each of the eNB and the UE may be able to perform beamforming based on CSI to obtain a multiplexing gain of MIMO antennas. To obtain CSI from the UE, the eNB allocates a PUCCH or a PUSCH to command the UE to feed back CSI for a downlink signal.

CSI is divided into three types of information: a Rank Indicator (RI), a Precoding Matrix Index (PMI), and a Channel Quality Indicator (CQI). First, RI is information on a channel rank as described above and indicates the number of streams that can be received via the same time-frequency resource. Since RI is determined by long-term fading of a channel, it may be generally fed back at a cycle longer than that of PMI or CQI.

Second, PMI is a value reflecting a spatial characteristic of a channel and indicates a precoding matrix index of the eNB preferred by the UE based on a metric of Signal-to-Interference plus Noise Ratio (SINR). Lastly, CQI is information indicating the strength of a channel and indicates a reception SINR obtainable when the eNB uses PMI.

Hereinafter, a reference signal will be described in greater detail.

In general, for channel measurement, a reference signal known to a transmitter and a receiver is transmitted from the transmitter to the receiver along with data. Such a reference signal indicates a modulation scheme as well as channel measurement to enable a demodulation process. The reference signal is divided into a dedicated reference signal (DRS) for a base station and a specific UE, that is, a UE-specific reference signal, and a common reference signal or cell-specific reference signal (CRS) for all UEs in a cell. The CRS includes a reference signal used when a UE measures and reports CQI/PMI/RI to a base station and is also referred to as a channel state information (CSI)-RS.

FIGs. 4 and 5 are diagrams showing the structure of a downlink reference signal in an LTE system supporting downlink transmission using four antennas. In particular, Fig. 4 shows a normal cyclic prefix (CP) and FIG. 5 shows an extended CP.

Referring to FIGs. 4 and 5, numerals 0 to 3 in grids mean CRSs transmitted for channel measurement and data demodulation and the CRSs may be transmitted to the UE not only in a data information region but also in a control information region.

In addition, "D" in a grid means a downlink demodulation-RS (DM-RS) which is a UE-specific RS and the DM-RS supports single antenna port transmission via a data region, that is, a physical downlink shared channel (PDSCH). The UE receives information indicating presence/absence of a DM-RS, which is a UE-specific RS, via a higher layer. FIGs. 4 and 5 show DM-RSs corresponding to antenna port 5. In the 3GPP standard 36.211, DM-RSs for antenna ports 7 to 14, that is, a total of eight antenna ports, are also defined.

FIG. 6 is a diagram showing a downlink DM-RS allocation example defined in the current 3GPP standard.

Referring to FIG. 6, DM-RSs corresponding to antenna ports {7, 8, 11, 13} are mapped to a DM-RS group 1 using a sequence per antenna port and DM-RSs corresponding to antenna ports {9, 10, 12, 14} are mapped to a DM-RS group 2 using a sequence per antenna port.

The above-described CSI-RS is proposed for the purpose of channel measurement of a PDSCH, separately from a CRS. Unlike the CRS, the CSI-RS may be defined as a maximum of 32 different resource configurations in order to reduce inter-cell interference (ICI) in a multi-cell environment.

CSI-RS (resource) configurations differ according to the number of antenna ports and, if possible, CSI-RSs defined as different (resource) configurations are configured to be transmitted between neighbor cells. Unlike the CRS, the CSI-RS supports up to eight antenna ports. In the 3GPP standard, antenna ports 15 to 22, that is, a total of eight antenna ports, are allocated as antenna ports for CSI-RS. Tables 1 and 2 below show CSI-RS configurations defined in the 3GPP standard. In particular, Table 1 shows a normal CP and Table 2 shows an extended CP.

Table 1

| | CSI reference signal configuration | Number of CSI reference signals configured | | | | | |
|---|---|---|---|---|---|---|---|
| | | 1 or 2 | | 4 | | 8 | |
| | | $(k',l')$ | $n_s \bmod 2$ | $(k',l')$ | $n_s \bmod 2$ | $(k',l')$ | $n_s \bmod 2$ |
| Frame structure type 1 and 2 | 0 | (9,5) | 0 | (9,5) | 0 | (9,5) | 0 |
| | 1 | (11,2) | 1 | (11,2) | 1 | (11,2) | 1 |
| | 2 | (9,2) | 1 | (9,2) | 1 | (9,2) | 1 |
| | 3 | (7,2) | 1 | (7,2) | 1 | (7,2) | 1 |
| | 4 | (9,5) | 1 | (9,5) | 1 | (9,5) | 1 |
| | 5 | (8,5) | 0 | (8,5) | 0 | | |
| | 6 | (10,2) | 1 | (10,2) | 1 | | |
| | 7 | (8,2) | 1 | (8,2) | 1 | | |
| | 8 | (6,2) | 1 | (6,2) | 1 | | |
| | 9 | (8,5) | 1 | (8,5) | 1 | | |
| | 10 | (3,5) | 0 | | | | |
| | 11 | (2,5) | 0 | | | | |
| | 12 | (5,2) | 1 | | | | |
| | 13 | (4,2) | 1 | | | | |
| | 14 | (3,2) | 1 | | | | |
| | 15 | (2,2) | 1 | | | | |
| | 16 | (1,2) | 1 | | | | |
| | 17 | (0,2) | 1 | | | | |
| | 18 | (3,5) | 1 | | | | |
| | 19 | (2,5) | 1 | | | | |
| Frame structure type 2 only | 20 | (11,1) | 1 | (11,1) | 1 | (11,1) | 1 |
| | 21 | (9,1) | 1 | (9,1) | 1 | (9,1) | 1 |
| | 22 | (7,1) | 1 | (7,1) | 1 | (7,1) | 1 |
| | 23 | (10,1) | 1 | (10,1) | 1 | | |
| | 24 | (8,1) | 1 | (8,1) | 1 | | |
| | 25 | (6,1) | 1 | (6,1) | 1 | | |
| | 26 | (5,1) | 1 | | | | |
| | 27 | (4,1) | 1 | | | | |
| | 28 | (3,1) | 1 | | | | |
| | 29 | (2,1) | 1 | | | | |
| | 30 | (1,1) | 1 | | | | |
| | 31 | (0,1) | 1 | | | | |

Table 2

| | CSI reference signal configuration | Number of CSI reference signals configured | | | | | |
|---|---|---|---|---|---|---|---|
| | | 1 or 2 | | 4 | | 8 | |
| | | $(k',l')$ | $n_s \bmod 2$ | $(k',l')$ | $n_s \bmod 2$ | $(k',l')$ | $n_s \bmod 2$ |
| Frame structure type 1 and 2 | 0 | (11,4) | 0 | (11,4) | 0 | (11,4) | 0 |
| | 1 | (9,4) | 0 | (9,4) | 0 | (9,4) | 0 |
| | 2 | (10,4) | 1 | (10,4) | 1 | (10,4) | 1 |
| | 3 | (9,4) | 1 | (9,4) | 1 | (9,4) | 1 |
| | 4 | (5,4) | 0 | (5,4) | 0 | | |
| | 5 | (3,4) | 0 | (3,4) | 0 | | |
| | 6 | (4,4) | 1 | (4,4) | 1 | | |
| | 7 | (3,4) | 1 | (3,4) | 1 | | |
| | 8 | (8,4) | 0 | | | | |
| | 9 | (6,4) | 0 | | | | |
| | 10 | (2,4) | 0 | | | | |
| | 11 | (0,4) | 0 | | | | |
| | 12 | (7,4) | 1 | | | | |
| | 13 | (6,4) | 1 | | | | |
| | 14 | (1,4) | 1 | | | | |
| | 15 | (0,4) | 1 | | | | |
| Frame structure type 2 only | 16 | (11,1) | 1 | (11,1) | 1 | (11,1) | 1 |
| | 17 | (10,1) | 1 | (10,1) | 1 | (10,1) | 1 |
| | 18 | (9,1) | 1 | (9,1) | 1 | (9,1) | 1 |
| | 19 | (5,1) | 1 | (5,1) | 1 | | |
| | 20 | (4,1) | 1 | (4,1) | 1 | | |
| | 21 | (3,1) | 1 | (3,1) | 1 | | |
| | 22 | (8,1) | 1 | | | | |
| | 23 | (7,1) | 1 | | | | |
| | 24 | (6,1) | 1 | | | | |
| | 25 | (2,1) | 1 | | | | |
| | 26 | (1,1) | 1 | | | | |
| | 27 | (0,1) | 1 | | | | |

In Tables 1 and 2, (k', l') denote an RE index, k' denotes a subcarrier index and l' denotes an OFDM symbol index. FIG. 7 shows CSI-RS configuration #0 in a normal CP among CSI-RS configurations defined in the current 3GPP standard.

In addition, a CSI-RS subframe configuration may be defined and includes a period $T_{\text{CSI-RS}}$ expressed in subframe units and a subframe offset $\Delta_{\text{CSI-RS}}$. Table 3 below shows a CSI-RS subframe configuration defined in the 3GPP standard.

Table 3

| **CSI-RS-SubframeConfig** $I_{\text{CSI-RS}}$ | **CSI-RS periodicity** $T_{\text{CSI-RS}}$ **(subframes)** | **CSI-RS subframe offset** $\Delta_{\text{CSI-RS}}$ **(subframes)** |
|---|---|---|
| 0 - 4 | 5 | $I_{\text{CSI-RS}}$ |
| 5 - 14 | 10 | $I_{\text{CSI-RS}} - 5$ |
| 15 - 34 | 20 | $I_{\text{CSI-RS}} - 15$ |
| 35 - 74 | 40 | $I_{\text{CSI-RS}} - 35$ |
| 75 - 154 | 80 | $I_{\text{CSI-RS}} - 75$ |

Hereinafter, quasi co-locaton (QCL) between antenna ports will be described.

QCL between antenna ports means that all or some of large-scale properties of a signal received by a UE via one antenna port (or a radio channel corresponding to the antenna port) are equal to all or some of large-scale properties of a signal received via another antenna port (or a radio channel corresponding to the antenna port). Here, the large-scale properties include Doppler spread and Doppler shift related to frequency offset, average delay and delay spread related to timing offset, etc. and may further include average gain.

According to the above definition, a UE may not assume that large-scale properties of non-QCL (NQCL) antenna ports are equal. In this case, the UE must independently perform a tracking procedure to acquire a frequency offset and a timing offset per antenna port.

In contrast, a UE may advantageously perform the following operations between QCL antenna ports.

1) The UE may equally apply a power-delay profile, delay spread and a Doppler spectrum and Doppler spread estimation result for a radio channel corresponding to a specific antenna port to a Wiener filter parameter used upon channel estimation of a radio channel corresponding to another antenna port.
2) In addition, the UE may acquire time synchronization and frequency synchronization for the specific antenna port and then apply the same synchronization to another antenna port.
3) Lastly, the UE may compute a reference signal received power (RSRP) measurement value for each QCL antenna port as an average with respect to average gain.

For example, when the UE receives DM-RS based downlink data channel scheduling information via a physical downlink control channel (PDCCH), the UE performs channel estimation with respect to a PDSCH via a DM-RS sequence indicated by the scheduling information and then performs data demodulation.

In this case, if a DM-RS antenna port for downlink data channel demodulation is QCL with a CRS antenna port of a serving cell, the UE may apply the large-scale properties of a radio channel estimated from the CRS antenna port thereof without change upon channel estimation via the DM-RS antenna port, thereby improving DM-RS based downlink data channel reception performance.

Similarly, if a DM-RS antenna port for downlink data channel demodulation is QCL with a CSI-RS antenna port of a serving cell, the UE may apply the large-scale properties of a radio channel estimated from the CSI-RS antenna port of the serving cell without change upon channel estimation via the DM-RS antenna port, thereby improving DM-RS based downlink data channel reception performance.

An LTE system defines that, when a downlink signal is transmitted in a CoMP mode, a base station sets one of a QCL type A and a QCL type B with respect to a UE via a higher layer signal.

Here, in QCL type A, it is assumed that CRS, DM-RS and CSI-RS antenna ports are QCL in terms of large-scale properties excluding average gain and the same node (point) transmits physical channels and signals. In contrast, in QCL type B, a maximum of four QCL modes per UE is set via a higher layer message such that CoMP transmission such as DPS or JT is possible. In which of the four QCL modes a downlink signal is received is dynamically defined to be set via downlink control information (DCI).

DPS transmission when the QCL type B is set will be described in greater detail.

First, assume that node #1 composed of $N_1$ antenna ports transmits CSI-RS resource #1 and node #2 composed of $N_2$ antenna ports transmits CSI-RS resource #2. In this case, CSI-RS resource #1 is included in QCL mode parameter set #1 and CSI-RS resource #2 is included in QCL mode parameter set #2. Further, the base station sets parameter set #1 and parameter set #2 via a higher layer signal with respect to a UE located in common coverage of node #1 and node #2.

Thereafter, the base station may perform DPS by setting parameter set #1 using DCI upon data (that is, PDSCH) transmission via node #1 and setting parameter set #2 upon data transmission via node #2 with respect to the UE. The UE may assume that CSI-RS resource #1 and DM-RS are QCL upon receiving parameter set #1 via DCI and may assume that CSI-RS resource #2 and DM-RS are QCL upon receiving parameter set #2.

Hereinafter, an active antenna system (AAS) and three-dimensional (3D) beamforming will be described.

In an existing cellular system, a base station used a method for reducing inter-cell interference (ICI) using mechanical tilting or electrical tilting and improving throughput, e.g., signal to interference plus noise ratios (SINRs), of UEs of a cell, which will be described in greater detail with reference to the drawings.

FIG. 8 is a diagram illustrating an antenna tilting method. In particular, FIG. 8(a) shows an antenna structure to which antenna tilting is not applied, FIG. 8(b) shows an antenna structure to which mechanical tilting is applied, and FIG. 8(c) shows an antenna structure to which mechanical tilting and electrical tilting are applied.

In comparison of FIG. 8(a) with FIG. 8(b), when mechanical tilting is applied, a beam direction is fixed upon initial installation as shown in FIG. 8(b). Further, when electrical tilting is applied, as shown in FIG. 8(c), a tilting angle may be changed using an internal phase shift module but only restrictive vertical beamforming is possible due to fixed tilting.

FIG. 9 is a diagram showing comparison between an existing antenna system and an active antenna system. In particular, FIG. 9(a) shows an existing antenna system and FIG. 9(b) shows an active antenna system.

Referring to FIG. 9, unlike the existing antenna system, the active antenna system is characterized in that power and phase adjustment of each antenna module is possible because each of a plurality of antenna modules includes a RF module including a power amplifier, that is, an active element.

As a general MIMO antenna structure, a linear antenna array, that is, one-dimensional antenna array, such as a uniform linear array (ULA), was considered. In the one-dimensional array structure, beams which may be formed by beamforming are present in a two-dimensional plane. This is applied to a passive antenna system (PAS)-based MIMO structure of an existing base station. Although vertical antennas and horizontal antennas are present even in a PAS based base station, the vertical antennas are fixed to one RF module and thus beamforming is impossible in a vertical direction and only mechanical tilting is applicable.

However, as an antenna structure of a base station has evolved to an active antenna system, independent RF modules may be implemented in vertical antennas and thus beamforming is possible not only in a horizontal direction but also in a vertical direction. This is referred to as elevation beamforming.

According to elevation beamforming, since formable beams may be expressed in three-dimensional space in vertical and horizontal directions, elevation beamforming may be referred to as three-dimensional beamforming. That is, three-dimensional beamforming becomes possible by evolution from a one-dimensional antenna array structure to a two-dimensional antenna array structure. Three-dimensional beamforming is possible not only in a planar antenna array structure but also in a ring-shaped three-dimensional array structure. Three-dimensional beamforming is characterized in that a MIMO process is performed in a three-dimensional space because various antenna structures may be used in addition to the one-dimensional antenna array structure.

FIG. 10 is a diagram showing an example of forming a UE-specific beam based on an active antenna system. Referring to FIG. 10, beamforming is possible when a UE moves back and forth as well as when a UE moves from side to side with respect to a base station, due to three-dimensional beamforming. Thus, a high degree of freedom may be provided to UE-specific beamforming.

Further, as a transmission environment using a two-dimensional antenna array structure based on an active antenna, a transmission environment from an indoor base station to an outdoor UE, a transmission environment from an outdoor base station to an indoor UE and a transmission environment (indoor hotspot) from an indoor base station to an indoor UE may be considered.

FIG. 11 is a diagram showing a two-dimensional beam transmission scenario based on an active antenna system.

Referring to FIG. 11, in an actual cell environment in which a plurality of buildings is present per a cell, a base station needs to consider vertical beam steering capabilities considering various UE heights due to building heights as well as UE-specific horizontal beam steering. In such a cell environment, channel properties different from those of an existing radio channel environment, e.g., shadow/path loss change due to height difference, fading property change, etc. need to be applied.

In other words, thee-dimensional beamforming is evolved from horizontal beamforming based on a one-dimensional antenna array structure and refers to a MIMO processing scheme which is an extension of or a combination with elevation beamforming or vertical beamforming based on a multi-dimensional antenna array structure such as a planar antenna array structure.

3D beamforming and, more particularly, UE-specific 3D beamforming have an advantage that transmission performance may be optimized due to horizontal and vertical locations of a UE and a scattering environment in a three-dimensional space. However, UE-specific 3D beamforming is a closed-loop precoding scheme. In order to perform UE-specific 3D beamforming using a closed-loop precoding scheme, accurate channel state information (CSI) between a base station and a UE is required. Since a difference between a minimum performance value and a maximum performance value according to a MIMO transmission scheme is increased due to increase in the number of base station antennas and dimension, performance sensitivity is increased due to base station CSI estimation error caused by, for example, channel estimation error, feedback error and channel aging. When CSI estimation error of the base station is not severe, normal transmission may be possible due to effects such as channel coding. However, when CSI estimation error is severe, packet reception error occurs and thus packet retransmission must be performed. That is, extreme performance deterioration may occur.

For example, when 3D beamforming is performed with respect to a UE which rapidly moves in a horizontal direction of a base station, a packet retransmission probability is high. Although an open-loop precoding scheme is conventionally used with respect to such a UE, since the UE, which rapidly moves in the horizontal direction, undergoes a static channel in a vertical direction, vertical beamforming is advantageous. In contrast, with respect to a UE, which rapidly moves in a vertical direction, or a UE which is located in an environment in which scattering is severe in a vertical direction, horizontal beamforming is advantageously performed. In addition, with respect to a UE located in a narrow high building, 3D beamforming is performed and a base station may fix a horizontal beamforming direction to a specific direction. That is, with respect to the UE, feedback information is configured for vertical beamforming only, thereby reducing feedback overhead.

In a 3D beamforming environment, partial dimensional (PD) beamforming capable of performing 2D beamforming, that is, one of vertical beamforming or horizontal beamforming, according to a user environment is proposed. In PD beamforming, a base station having two-dimensional array transmit antenna ports performs closed-loop precoding in one of a vertical precoder and a horizontal precoder and performs one of default precoding defined in a system, reference precoding prespecified by a base station or network and random precoding randomly decided by a base station in the other precoder.

FIG. 12 is a diagram showing comparison between an existing precoding scheme and a PD beamforming scheme. In particular, the left of FIG. 12 shows an existing precoding scheme and the right of FIG. 12 shows a PD beamforming scheme.

Referring to FIG. 12, a region of a formed beam has a narrow width in one of a horizontal direction and a vertical direction. Accordingly, it is possible to provide constant beam gain to a UE moving in a specific direction.

FIG. 13 is a diagram showing comparison between an existing precoding scheme and a PD beamforming scheme to which adaptive beam width adjustment is applied.

When an adaptive beam width adjustment method is applied to PD beamforming, a beamforming scheme may be expressed as shown in FIG. 13. That is, when a UE moves in a vertical or horizontal direction, closed-loop beamforming is performed in a direction in which Doppler shift is low, that is, a direction orthogonal to a movement direction of a UE and the number of antennas participating in transmission is adjusted according to the velocity of the UE to adjust beam width in a direction in which Doppler shift is high.

When the velocity of the UE in the vertical direction and the horizontal direction are accurately known, since a beam width which will be applied in a vertical direction and a horizontal direction may be adaptively changed, it is important to check the movement velocity of the UE in the vertical direction and the horizontal direction in order to apply PD beamforming. In order to adaptively change the beam width, change in number of transmit antennas, transmit power allocation per antenna, phase change, etc. may be used.

A UE may determine a domain as shown in FIG. 14 in order to measure the velocity thereof in the vertical direction and the horizontal direction. FIG. 14 is a diagram showing an example of defining a measurement domain based on locations of a user equipment (UE) and a base station according to an embodiment of the present invention.

Referring to FIG. 14, an elevation direction or a gravity direction of a UE is a z-axis, an axis obtained by connecting the location of a base station and the location of a UE in a straight line and projecting the straight line onto a horizontal plane or ground is a y-axis (the y-axis is perpendicular to a z-axis) and the remaining axis on a horizontal plane perpendicular to the z-axis and the y-axis is an x-axis. In addition, an axis on a y-z plane perpendicular to a straight line connecting the locations of the base station and the UE is a w-axis. In addition, a direction of the base station viewed from the UE is expressed by a b direction. That is, the b-axis and the w-axis are perpendicular to each other.

FIG. 15 is a diagram showing the case in which a base station performs horizontal beamforming according to an embodiment of the present invention, and FIG. 16 is a diagram showing the case in which a base station performs vertical beamforming according to an embodiment of the present invention.

As shown in FIG. 15, when a base station performs beamforming in a horizontal direction, this beam may be regarded as moving from a UE along the x-axis. As shown in FIG. 16, when the base station performs beamforming in a vertical direction, this beam may be regarded as moving from the UE along the w-axis. Accordingly, the base station may determine a transmission scheme in the vertical direction and the horizontal direction by detecting the x-axis velocity and w-axis velocity of the UE. For example, whether open-loop MIMO or closed-loop MIMO is applied or a parameter for configuring a MIMO precoder such as beam width may be determined.

Accordingly, the present invention proposes a method for measuring the velocity of a UE in a vertical beamforming direction and a horizontal beamforming direction according to location relative to a base station and feeding the velocities back to the base station. The velocity information reported to the base station includes at least one of absolute velocity information, acceleration information and Doppler information.

More specifically, the movement velocity $v_w$ in the vertical beamforming direction and the movement velocity $v_x$ in the horizontal beamforming direction may be calculated by measuring the absolute movement velocity v of the UE, the movement velocity $v_b$ of the UE in the direction of the base station and the vertical movement velocity $v_z$ of the UE. Since the w-axis, the b-axis and the z-axis are in the same plane, the component $v_w$ of the w-axis may be measured via the values of the b-axis and the z-axis. The absolute movement velocity v and vertical movement velocity $v_z$ of the UE may be acquired via various sensors (a gravity sensor, an acceleration sensor, a tilt sensor, etc.) of the UE.

However, it is difficult to acquire the velocity $v_b$ of the UE in the direction of the base station using the sensors of the UE only. That is, in order to acquire the velocity $v_b$ of the UE in the direction of the base station, the location of the base station should be known. Accordingly, the velocity $v_b$ of the UE in the direction of the base station is preferably measured by detecting Doppler shift of a signal transmitted from the base station. Frequency change due to Doppler shift is determined by a velocity $\Delta v$ of a receiver relative to a transmitter as shown in Equation 8 below. In Equation 8 below, c denotes the velocity of an electromagnetic wave and $f_0$ denotes a frequency of a transmitted signal.

Equation 8

$$\Delta f = \frac{\Delta v}{c} f_0$$

Accordingly, as shown in Equation 8, when frequency change is measured, the velocity $v_b$ of the UE in the b-axis may be acquired.

Additionally, the velocity $v_b$ of the UE in the direction of the base station may be measured by detecting change in an arrival time of a signal transmitted from the base station per a unit time. More specifically, since velocity is change in location per a unit time, when the location of the UE in the direction (b-axis) of the base station is changed, a distance between the base station and the UE is changed and thus the time when the signal transmitted from the base station reaches the UE is also changed. As a result, when a difference between signal arrival times is measured, $v_b$ may be measured.

Change in arrival time may be measured via a signal synchronization process. In general, since the UE continuously performs synchronization with the signal of the base station, delay time change may be estimated via synchronization timing change in the synchronization process. Alternatively, change in arrival time may be estimated via a difference between a base station transmission period and a UE reception period based on a specific signal periodically transmitted by the base station or transmitted by two or more REs separated from each other by a predetermined time interval. For example, if a signal transmitted with a period of 1 msec is received at an interval of 0.95 msec, an arrival time is decreased by 0.05 msec and this means that the UE becomes closer to the base station. In an LTE system, a pre-defined signal, such as CRS, CSI-RS, PSS, SSS, PRS, UE-specific RS, etc., may be used for the above purpose. Alternatively, a new signal may be defined for the above purpose.

When $v_b$ and $v_z$ are measured using the above method, $v_w$ may be estimated.

The UE may measure the movement speed v thereof to easily obtain a movement velocity $v_x$ component in a horizontal beamforming direction which is a perpendicular component of a plane, in which b, z, w and y are located, as a three-dimensional velocity vector. For example, since the vector v may be expressed by the component values of the b-axis, the w-axis and the x-axis which are perpendicular to each other, Equation 9 below is satisfied.

Equation 9

$$v^2 = v_b^2 + v_w^2 + v_x^2$$

If Equation 9 above is used, $v_x$ may be obtained from v, $v_b$ and $v_w$.

If the distance between the base station and the UE is significantly greater than a height difference between the base station and the UE, the w-axis and the z-axis substantially coincide with each other. Accordingly, in this case, vertical movement of the UE depends on an elevation beamforming angle. In contrast, if the distance between the base station and the UE is significantly less than a height difference between the base station and the UE, the w-axis and the y-axis substantially coincide with each other. That is, in this case, the elevation beamforming angle is changed according to movement of the UE relative to the base station, rather than vertical movement of the UE.

Accordingly, if it is determined that the distance between the base station and the UE is greater than the height difference between the base station and the UE, the movement velocity $v_w$ in the vertical beamforming direction is preferably obtained by measuring the vertical movement velocity $v_z$ of the UE. Similarly, if it is determined that the distance between the base station and the UE is less than the height difference between the base station and the UE, the movement velocity $v_w$ in the vertical beamforming direction is preferably obtained by measuring change $v_y$ in distance between the UE and the base station per unit time.

Change in distance between the UE and the base station per unit time may be confirmed via relative location change of the UE when the locations of the base station and the UE on the horizontal plane (x-y plane) are known. The location of the UE may be acquired using GPS information, etc. The location of the base station may be signaled from the base station to the UE.

Although the present invention has been described in downlink, the present invention is not limited thereto. That is, the present proposals are applicable to uplink transmission. In addition, the present proposals are applicable to direct communication between UEs.

In addition, when feedback information proposed by the present invention is applied to a wide area system, a separate feedback information set may be fed back with respect to each frequency region (e.g., subband, sub-carrier, resource block, etc.). Alternatively, feedback information may be transmitted only in a specific frequency region selected by a UE or specified by a base station. The frequency region may include one or more continuous frequency regions or discontinuous frequency regions.

FIG. 17 is a block diagram showing a communication apparatus according to one embodiment of the present invention.

Referring to FIG. 17, a communication apparatus 1700 includes a processor 1710, a memory 1720, a Radio Frequency (RF) module 1730, a display module 1740 and a user interface module 1750.

The communication apparatus 1700 is shown for convenience of description and some modules thereof may be omitted. In addition, the communication apparatus 1700 may further include necessary modules. In addition, some modules of the communication apparatus 1700 may be subdivided. The processor 1710 is configured to perform an operation of the embodiment of the present invention described with reference to the drawings. For a detailed description of the operation of the processor 1710, reference may be made to the description associated with FIGs. 1 to 16.

The memory 1720 is connected to the processor 1710 so as to store an operating system, an application, program code, data and the like. The RF module 1730 is connected to the processor 1710 so as to perform a function for converting a baseband signal into a radio signal or converting a radio signal into a baseband signal. The RF module 1730 performs analog conversion, amplification, filtering and frequency up-conversion or inverse processes thereof. The display module 1740 is connected to the processor 1710 so as to display a variety of information. As the display module 1740, although not limited thereto, a well-known device such as a Liquid Crystal Display (LCD), a Light Emitting Diode (LED), or an Organic Light Emitting Diode (OLED) may be used. The user interface module 1750 is connected to the processor 1710 and may be configured by a combination of well-known user interfaces such as a keypad and a touch screen.

The above-described embodiments are proposed by combining constituent components and characteristics of the present invention according to a predetermined format. The individual constituent components or characteristics should be considered to be optional factors on the condition that there is no additional remark. If required, the individual constituent components or characteristics may not be combined with other components or characteristics. In addition, some constituent components and/or characteristics may be combined to implement the embodiments of the present invention. The order of operations to be disclosed in the embodiments of the present invention may be changed. Some components or characteristics of any embodiment may also be included in other embodiments, or may be replaced with those of the other embodiments as necessary. Moreover, it will be apparent that some claims referring to specific claims may be combined with other claims referring to the other claims other than the specific claims to constitute the embodiment or add new claims by means of amendment after the application is filed.

In this document, a specific operation described as performed by the base station may be performed by an upper node of the base station. Namely, it is apparent that, in a network comprised of a plurality of network nodes including a base station, various operations performed for communication with a UE may be performed by the base station, or network nodes other than the base station. The term base station may be replaced with the terms fixed station, Node B, eNode B (eNB), access point, etc.

The embodiments of the present invention can be implemented by a variety of means, for example, hardware, firmware, software, or a combination thereof. In the case of implementing the present invention by hardware, the present invention can be implemented through application specific integrated circuits (ASICs), digital signal processors (DSPs), digital signal processing devices (DSPDs), programmable logic devices (PLDs), field programmable gate arrays (FPGAs), a processor, a controller, a microcontroller, a microprocessor, etc.

If operations or functions of the present invention are implemented by firmware or software, the present invention can be implemented in the form of a variety of formats, for example, modules, procedures, functions, etc. The software code may be stored in a memory unit so as to be driven by a processor. The memory unit may be located inside or outside of the processor, so that it can communicate with the aforementioned processor via a variety of well-known parts.

It will be apparent to those skilled in the art that various modifications and variations can be made within the scope of the appended claims

[Industrial Applicability]

Although an example in which a method for measuring mobility of a user equipment (UE) for multi-antenna beamforming in a wireless communication system and an apparatus therefor is applied to a 3GPP LTE system is described, the present invention is applicable to various wireless communication systems in addition to the 3GPP LTE system.

## Claims

1. A method for controlling a beam width for multi-antenna based beamforming in a wireless communication system, the method comprising:

receiving a signal from a base station;
determining a velocity $v_b$ of the UE in a direction of the base station;
calculating movement velocity information of a vertical beamforming direction movement velocity $v_w$ and a horizontal beamforming direction movement velocity $v_x$ of the UE based on the velocity $v_b$ of the UE in a direction of the base station and based on an absolute movement velocity v of the UE; and
reporting the movement velocity information to the base station,
wherein the velocity $v_b$ of the UE in a direction of the base station is determined based on a Doppler shift of the signal,
wherein a closed-loop beamforming is performed by the base station in a direction that has a lower Doppler shift, that is, a direction orthogonal to a movement direction of a UE when a UE moves in a vertical or horizontal direction,
wherein the beam width is controlled by adjusting a number of antennas participating in transmission according to the movement velocity information in a movement direction that has a higher Doppler shift between the vertical movement direction and the horizontal movement direction of the UE by the base station.

**2.** The method of claim 1, wherein calculating the movement velocity information comprises:

measuring the absolute movement velocity v of the UE and a vertical direction movement velocity of the UE; and
calculating the information of the vertical beamforming direction movement velocity $v_w$ and horizontal beamforming direction movement velocity $v_x$ of the UE based on the absolute movement velocity v, the vertical movement velocity and the velocity $v_b$ of the UE in the direction of the base station.

**3.** The method of claim 2, wherein, when a ratio of a height difference between the base station and the UE to a distance between the base station and the UE is equal to or less than a threshold, the vertical beamforming direction movement velocity $v_w$ of the UE is equal to the vertical movement velocity of the UE.

**4.** A method for controlling a beam width for multi-antenna based beamforming by a base station in a wireless communication system, the method comprising:

transmitting a signal to a user equipment, UE;
receiving, from the UE, movement velocity information of a vertical beamforming direction movement velocity $v_w$ and a horizontal beamforming direction movement velocity $v_x$ of the UE calculated based on a velocity $v_b$ of the UE in a direction of the base station from the UE and based on an absolute movement velocity v of the UE, wherein the velocity $v_b$ of the UE in a direction of the base station is determined based on a Doppler shift of the signal by the UE;
performing a closed-loop beamforming by the base station in a direction that has a lower Doppler shift, that is, a direction orthogonal to a movement direction of a UE when a UE moves in a vertical or horizontal direction; and
controlling the beam width by adjusting a number of antennas participating in transmission according to the movement velocity information in a movement direction that has a higher Doppler shift between the vertical movement direction and the horizontal movement direction of the UE.

**5.** The method of claim 4, wherein the movement velocity information is calculated by the UE based on the absolute movement velocity v of the UE, the vertical movement velocity of the UE and the velocity $v_b$ of the UE in the direction of the base station.

**6.** The method of claim 5, wherein, when a ratio of a height difference between the base station and the UE to a distance between the base station and the UE is equal to or less than a threshold, the vertical beamforming direction movement velocity $v_w$ of the UE is equal to the vertical movement velocity of the UE.

**Patentansprüche**

**1.** Verfahren zur Steuerung einer Strahlbreite zur Strahlformung auf der Basis von mehreren Antennen in einem drahtlosen Kommunikationssystem, wobei das Verfahren umfasst:

Empfangen eines Signals von einer Basisstation;
Bestimmen einer Geschwindigkeit $v_b$ des UE in einer Richtung der Basisstation;
Berechnen einer Bewegungsgeschwindigkeitsinformation einer vertikalen Strahlformungsrichtungsbewegungsgeschwindigkeit $v_w$ und einer horizontalen Strahlformungsrichtungsbewegungsgeschwindigkeit $v_x$ des UE auf der Basis der Geschwindigkeit $v_b$ des UE in einer Richtung der Basisstation und auf der Basis einer absoluten Bewegungsgeschwindigkeit v des UE und
Melden der Bewegungsgeschwindigkeitsinformation an die Basisstation,
wobei die Geschwindigkeit $v_b$ des UE in einer Richtung der Basisstation auf der Basis einer Dopplerverschiebung des Signals bestimmt wird,
wobei eine Strahlformung in einem geschlossenen Kreislauf durch die Basisstation in einer Richtung, die eine niedrigere Dopplerverschiebung aufweist, durchgeführt wird, d. h. einer Richtung, die orthogonal zu einer Bewegungsrichtung eines UE ist, wenn ein UE sich in einer vertikalen oder horizontalen Richtung bewegt,
wobei die Strahlbreite durch Justieren einer Anzahl von Antennen, die an einem Senden teilnehmen, gemäß der Bewegungsgeschwindigkeitsinformation in einer Bewegungsrichtung, die eine höhere Dopplerverschiebung aufweist, zwischen der vertikalen Bewegungsrichtung und der horizontalen Bewegungsrichtung des UE durch die Basisstation gesteuert wird.

**2.** Verfahren nach Anspruch 1, wobei das Berechnen der Bewegungsgeschwindigkeitsinformation umfasst:

Messen der absoluten Bewegungsgeschwindigkeit v des UE und einer vertikalen Richtungsbewegungsgeschwindigkeit $v_z$ des UE und
Berechnen der Information der vertikalen Strahlformungsrichtungsbewegungsgeschwindigkeit $v_w$ und der horizontalen Strahlformungsrichtungsbewegungsgeschwindigkeit $v_x$ des UE auf der Basis der absoluten Bewegungsgeschwindigkeit v, der vertikalen Bewegungsgeschwindigkeit und der Geschwindigkeit $v_b$ des UE in der Richtung der Basisstation.

**3.** Verfahren nach Anspruch 2, wobei, wenn ein Verhältnis eines Höhenunterschieds zwischen der Basisstation und dem UE zu einem Abstand zwischen der Basisstation und dem UE kleiner gleich einem Grenzwert ist, die vertikale Strahlformungsrichtungsbewegungsgeschwindigkeit $v_w$ des UE gleich der vertikalen Bewegungsgeschwindigkeit des UE ist.

**4.** Verfahren zur Steuerung einer Strahlbreite zur Strahlformung auf der Basis von mehreren Antennen durch eine Basisstation in einem drahtlosen Kommunikationssystem, wobei das Verfahren umfasst:

Senden eines Signals an ein Teilnehmergerät, UE;
Empfangen einer Bewegungsgeschwindigkeitsinformation einer vertikalen Strahlformungsrichtungsbewegungsgeschwindigkeit $v_w$ und einer horizontalen Strahlformungsrichtungsbewegungsgeschwindigkeit $v_x$ des UE von dem UE, die auf der Basis einer Geschwindigkeit $v_b$ des UE in einer Richtung der Basisstation von dem UE und auf der Basis einer absoluten Bewegungsgeschwindigkeit v des UE berechnet wurden, wobei die Geschwindigkeit $v_b$ des UE in einer Richtung der Basisstation auf der Basis einer Dopplerverschiebung des Signals durch das UE bestimmt wird;
Durchführen einer Strahlformung in einem geschlossenen Kreislauf durch die Basisstation in einer Richtung, die eine niedrigere Dopplerverschiebung aufweist, d. h. einer Richtung, die orthogonal zu einer Bewegungsrichtung eines UE ist, wenn ein UE sich in einer vertikalen oder horizontalen Richtung bewegt;
Steuern der Strahlbreite durch Justieren einer Anzahl von Antennen, die an einem Senden teilnehmen, gemäß der Bewegungsgeschwindigkeitsinformation in einer Bewegungsrichtung, die eine höhere Dopplerverschiebung aufweist, zwischen der vertikalen Bewegungsrichtung und der horizontalen Bewegungsrichtung des UE.

**5.** Verfahren nach Anspruch 4, wobei die Bewegungsgeschwindigkeitsinformation durch das UE auf der Basis der absoluten Bewegungsgeschwindigkeit v des UE, der vertikalen Bewegungsgeschwindigkeit des UE und der Geschwindigkeit $v_b$ des UE in der Richtung der Basisstation berechnet wird.

**6.** Verfahren nach Anspruch 5, wobei, wenn ein Verhältnis eines Höhenunterschieds zwischen der Basisstation und dem UE zu einem Abstand zwischen der Basisstation und dem UE kleiner gleich einem Grenzwert ist, die vertikale Strahlformungsrichtungsbewegungsgeschwindigkeit $v_w$ des UE gleich der vertikalen Bewegungsgeschwindigkeit des UE ist.

## Revendications

**1.** Procédé de commande d’une largeur de faisceau pour une formation de faisceau basée sur de multiples antennes dans un système de communication sans fil, le procédé comprenant :

recevoir un signal en provenance d'une station de base ;
déterminer une vitesse $v_b$ de l'UE dans une direction de la station de base ;
calculer des informations de vitesse de déplacement d'une vitesse de déplacement de direction de formation de faisceau verticale $v_w$ et d'une vitesse de déplacement de direction de formation de faisceau horizontale $v_x$ de l'UE sur la base de la vitesse $v_b$ de l'UE dans une direction de la station de base et sur la base d'une vitesse de déplacement absolue v de l'UE ; et
rapporter les informations de vitesse de déplacement à la station de base,
dans lequel la vitesse $v_b$ de l'UE dans une direction de la station de base est déterminée sur la base d'un décalage Doppler du signal,
dans lequel une formation de faisceau en boucle fermée est réalisée par la station de base dans une direction qui présente un décalage Doppler inférieur, à savoir, une direction orthogonale à une direction de déplacement de l'UE lorsqu'un UE se déplace dans une direction verticale ou horizontale,
dans lequel la largeur de faisceau est commandée par réglage d'un nombre d'antennes participant à une émission selon les informations de vitesse de déplacement dans une direction de déplacement qui présente un décalage Doppler supérieur entre la direction de déplacement verticale et la direction de déplacement horizontale de l'UE par la station de base.

**2.** Procédé selon la revendication 1, dans lequel le calcul des informations de vitesse de déplacement comprend :

mesurer la vitesse de déplacement absolue v de l'UE et une vitesse de déplacement de direction verticale de l'UE ; et
calculer les informations de la vitesse de déplacement de direction de formation de faisceau verticale $v_w$ et de la vitesse de déplacement de direction de formation de faisceau horizontale $v_x$ de l'UE sur la base de la vitesse de déplacement absolue v, de la vitesse de déplacement verticale et de la vitesse $v_b$ de l'UE dans la direction de la station de base.

**3.** Procédé selon la revendication 2, dans lequel, lorsqu'un rapport d'une différence de hauteur entre la station de base et l'UE sur une distance entre la station de base et l'UE est égal ou inférieur à un seuil, la vitesse de déplacement de direction de formation de faisceau verticale $v_w$ de l'UE est égale à la vitesse de déplacement verticale $v_z$ de l'UE.

**4.** Procédé de commande d'une largeur de faisceau pour une formation de faisceau basée sur de multiples antennes par une station de base dans un système de communication sans fil, le procédé comprenant :

émettre un signal vers un équipement utilisateur, UE ;
recevoir, en provenance de l'UE, des informations de vitesse de déplacement d'une vitesse de déplacement de direction de formation de faisceau verticale $v_w$ et d'une vitesse de déplacement de direction de formation de faisceau horizontale $v_x$ de l'UE calculées sur la base d'une vitesse $v_b$ de l'UE dans une direction de la station de base depuis l'UE et sur la base d'une vitesse de déplacement absolue v de l'UE, la vitesse $v_b$ de l'UE dans une direction de la station de base étant déterminée sur la base d'un décalage Doppler du signal par l'UE ;
réaliser une formation de faisceau en boucle fermée par la station de base dans une direction qui présente un décalage Doppler inférieur, à savoir, une direction orthogonale à une direction de déplacement d'un UE lorsqu'un UE se déplace dans une direction verticale ou horizontale ; et
commander la largeur de faisceau par réglage d'un nombre d'antennes participant à une émission selon les informations de vitesse de déplacement dans une direction de déplacement qui présente un décalage Doppler supérieur entre la direction de déplacement verticale et la direction de déplacement horizontale de l'UE.

**5.** Procédé selon la revendication 4, dans lequel les informations de vitesse de déplacement sont calculées par l'UE sur la base de la vitesse de déplacement absolue v de l'UE, de la vitesse de déplacement verticale $v_z$ de l'UE et de la vitesse $v_b$ de l'UE dans la direction de la station de base.

**6.** Procédé selon la revendication 5, dans lequel, lorsqu'un rapport d'une différence de hauteur entre la station de base et l'UE sur une distance entre la station de base et l'UE est égal ou inférieur à un seuil, la vitesse de déplacement de direction de formation de faisceau verticale $v_w$ de l'UE est égale à la vitesse de déplacement verticale $v_z$ de l'UE.

FIG. 1

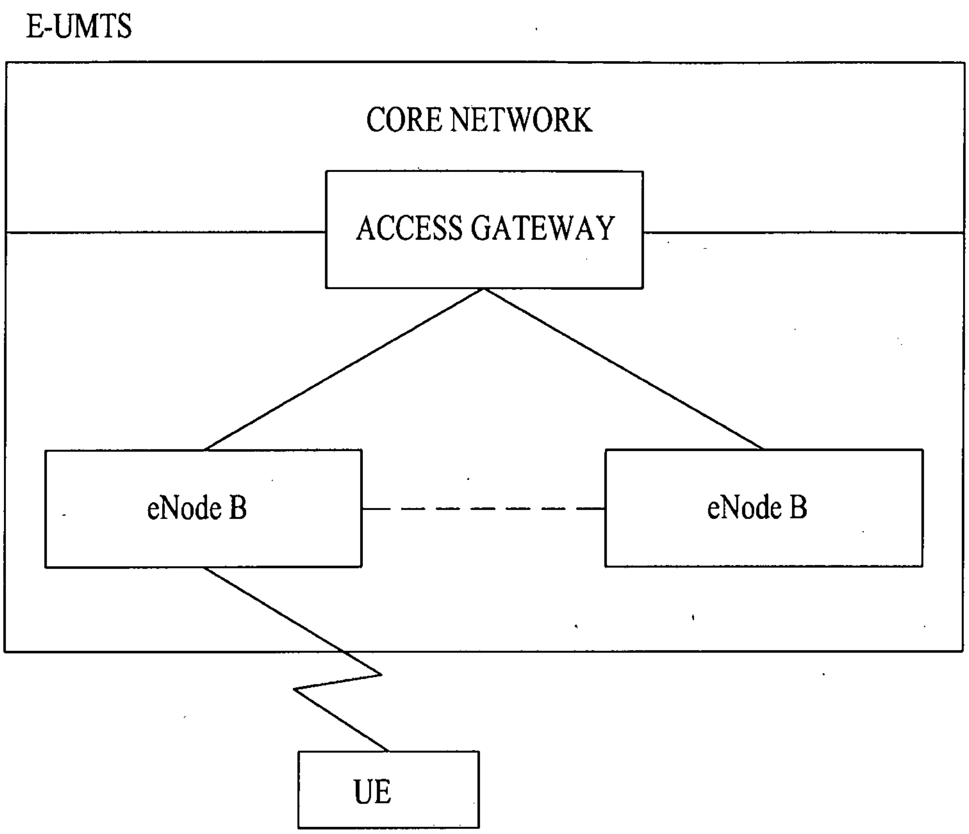

FIG. 2

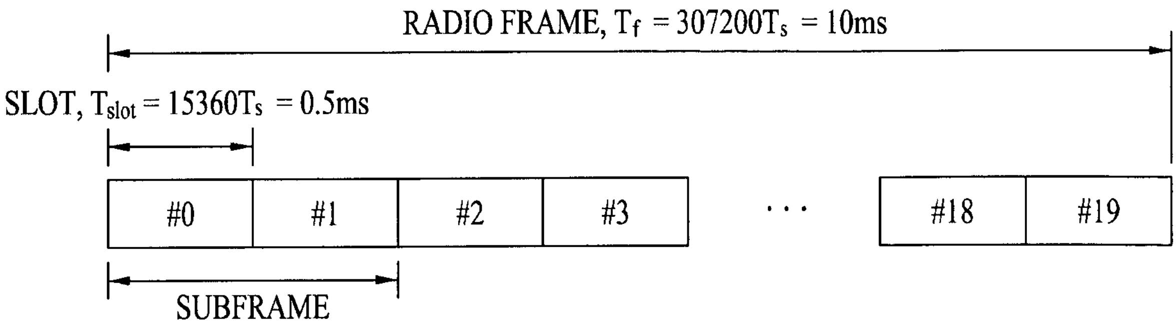
RADIO FRAME, $T_f$ = 307200$T_s$ = 10ms
SLOT, $T_{slot}$ = 15360$T_s$ = 0.5ms
#0
#1
#2
#3
...
#18
#19
SUBFRAME

FIG. 3

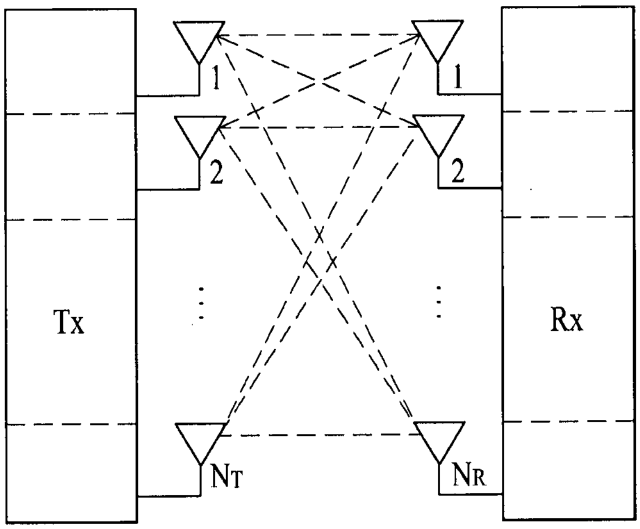
Tx
Rx
1
2
$N_T$
1
2
$N_R$

FIG. 4

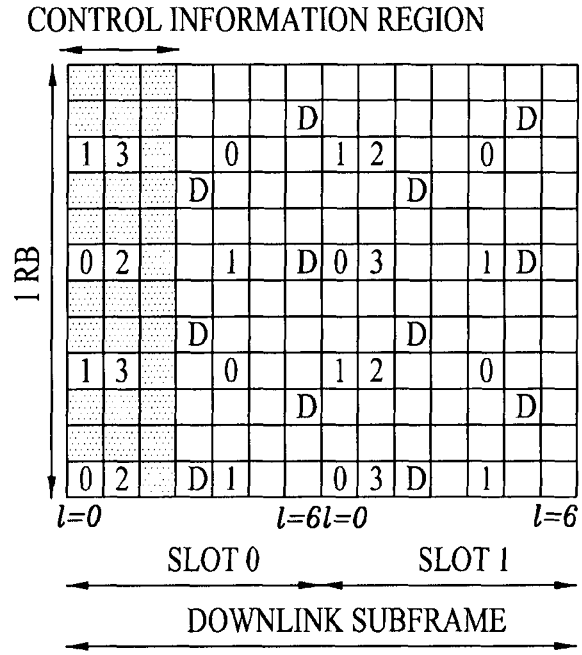
CONTROL INFORMATION REGION
1 RB
D
1 3 0 1 2 0
D
0 2 1 D 0 3 1 D
D
1 3 0 1 2 0
D
0 2 D 1 0 3 D 1
l=0
l=6l=0
l=6
SLOT 0
SLOT 1
DOWNLINK SUBFRAME

FIG. 5

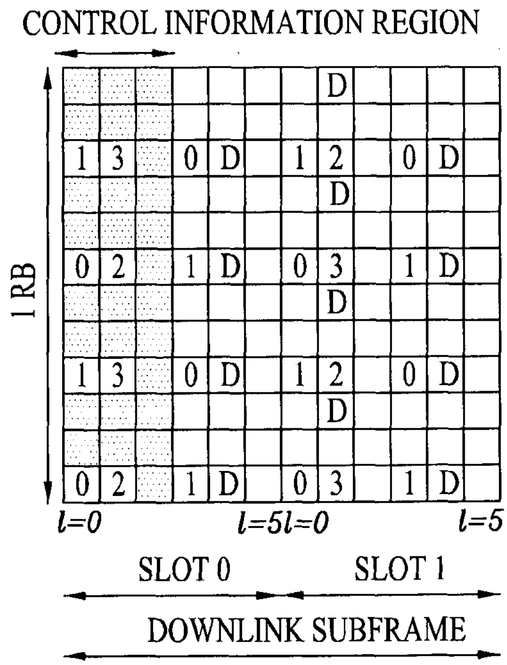
CONTROL INFORMATION REGION
1 RB
D
1 3 0 D 1 2 0 D
D
0 2 1 D 0 3 1 D
D
1 3 0 D 1 2 0 D
D
0 2 1 D 0 3 1 D
l=0
l=5l=0
l=5
SLOT 0
SLOT 1
DOWNLINK SUBFRAME

FIG. 6

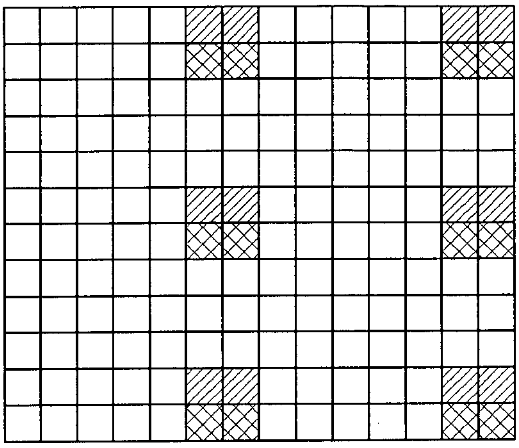

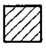 : DMRS GROUP 1

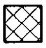 : DMRS GROUP 2

FIG. 7

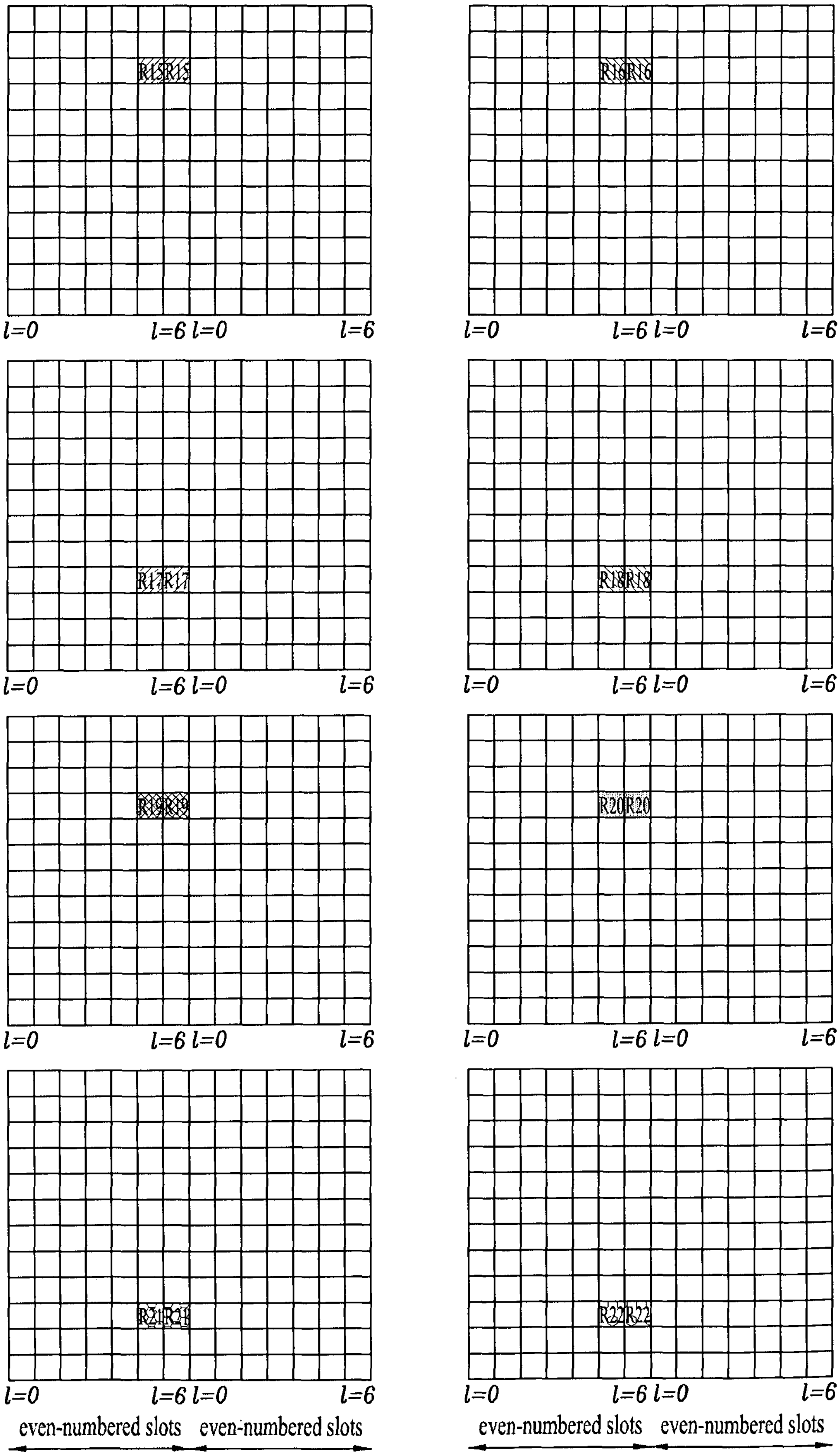
R15 R15
R16 R16
R17 R17
R18 R18
R19 R19
R20 R20
R21 R21
R22 R22
l=0
l=6
even-numbered slots
even-numbered slots

FIG. 8

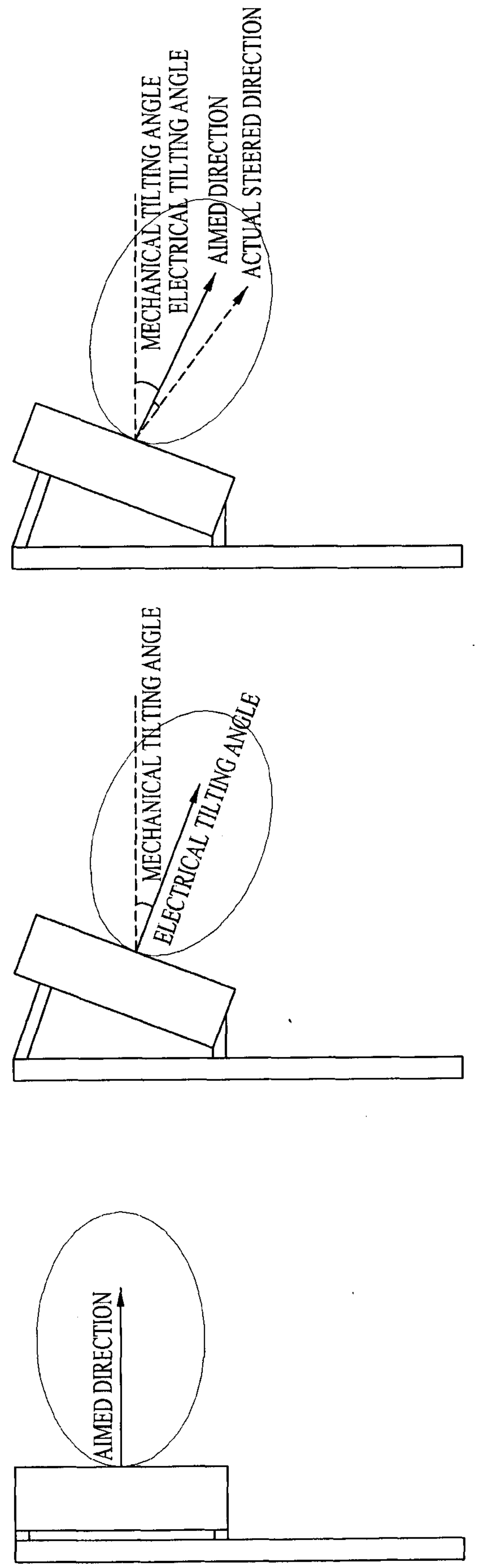
MECHANICAL TILTING ANGLE
ELECTRICAL TILTING ANGLE
AIMED DIRECTION
ACTUAL STEERED DIRECTION
MECHANICAL TILTING ANGLE
ELECTRICAL TILTING ANGLE
AIMED DIRECTION

(a) (b) (c)

FIG. 9

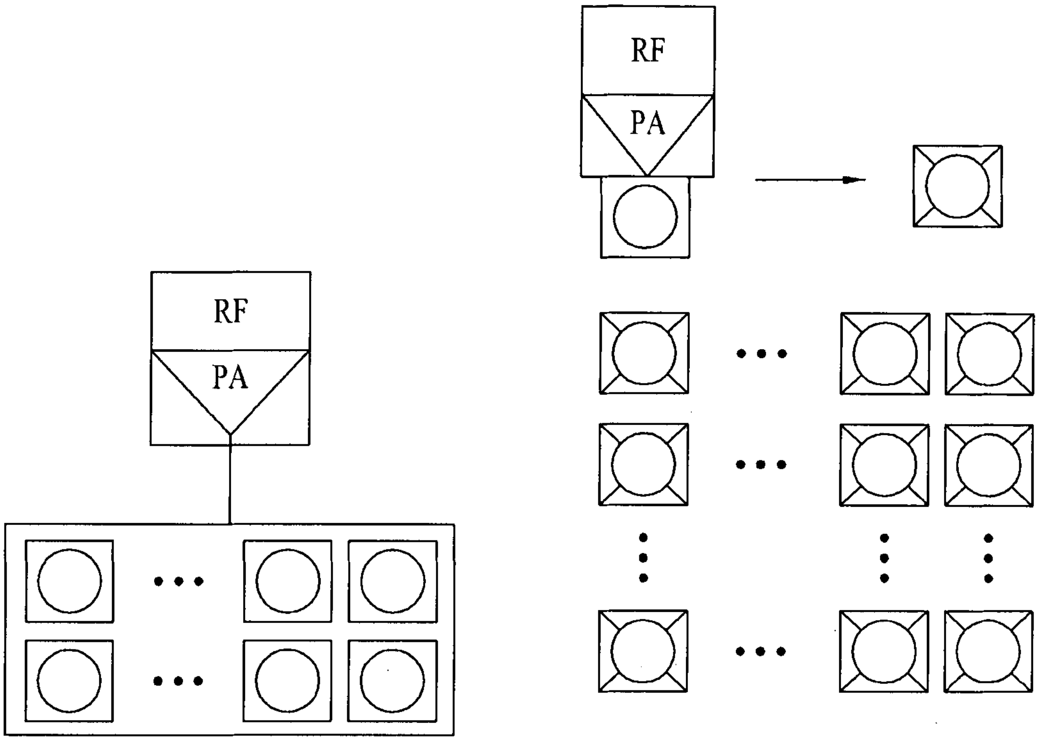


( a ) CONVENTIONAL ANTENNA SYSTEM

( b ) AAS

FIG. 10

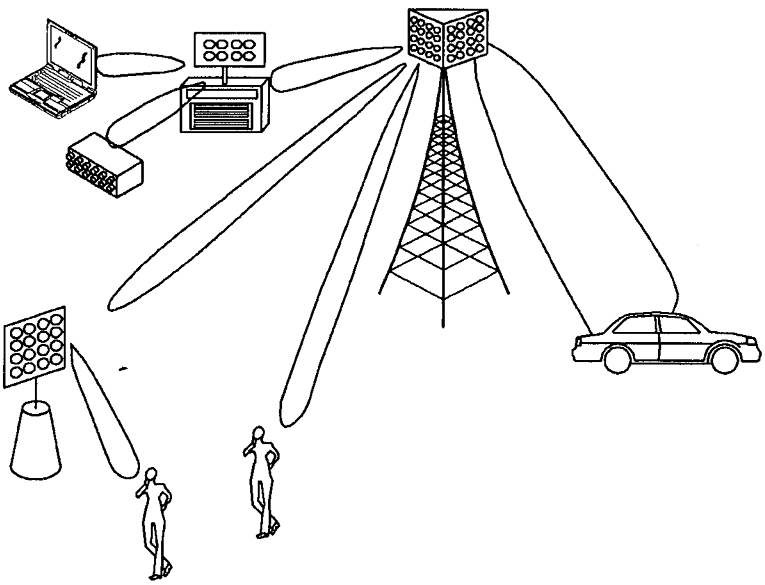

FIG. 11

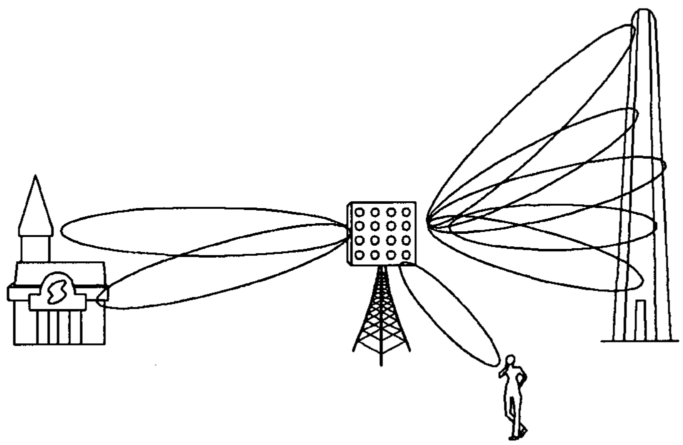

FIG. 12

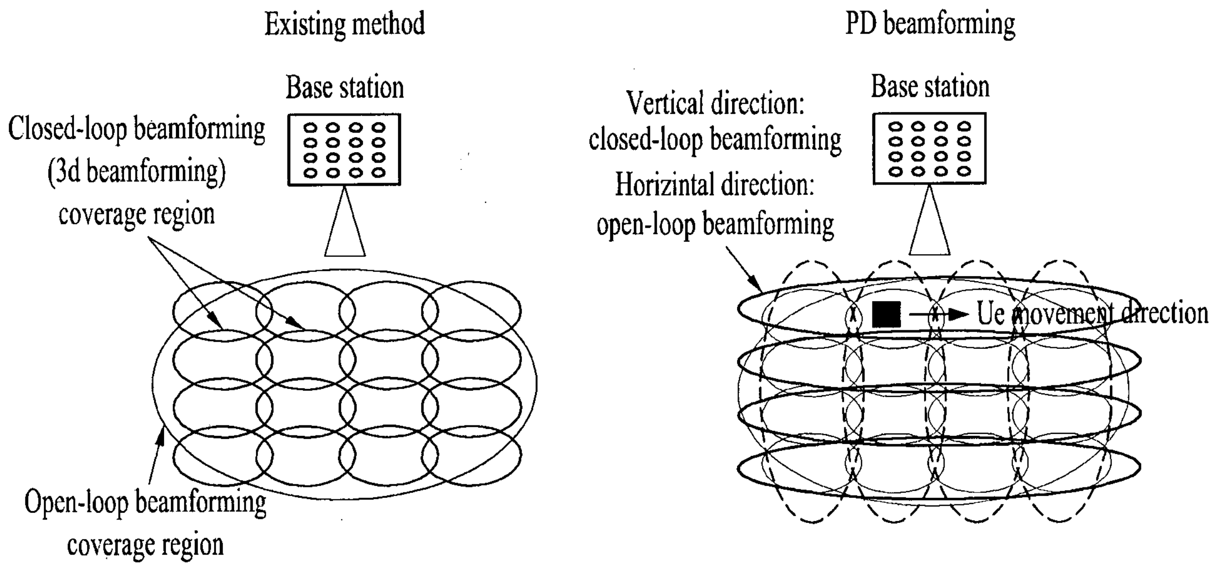
Existing method
Base station
Closed-loop beamforming
(3d beamforming)
coverage region
Open-loop beamforming
coverage region
PD beamforming
Base station
Vertical direction:
closed-loop beamforming
Horizintal direction:
open-loop beamforming
Ue movement direction

FIG. 13

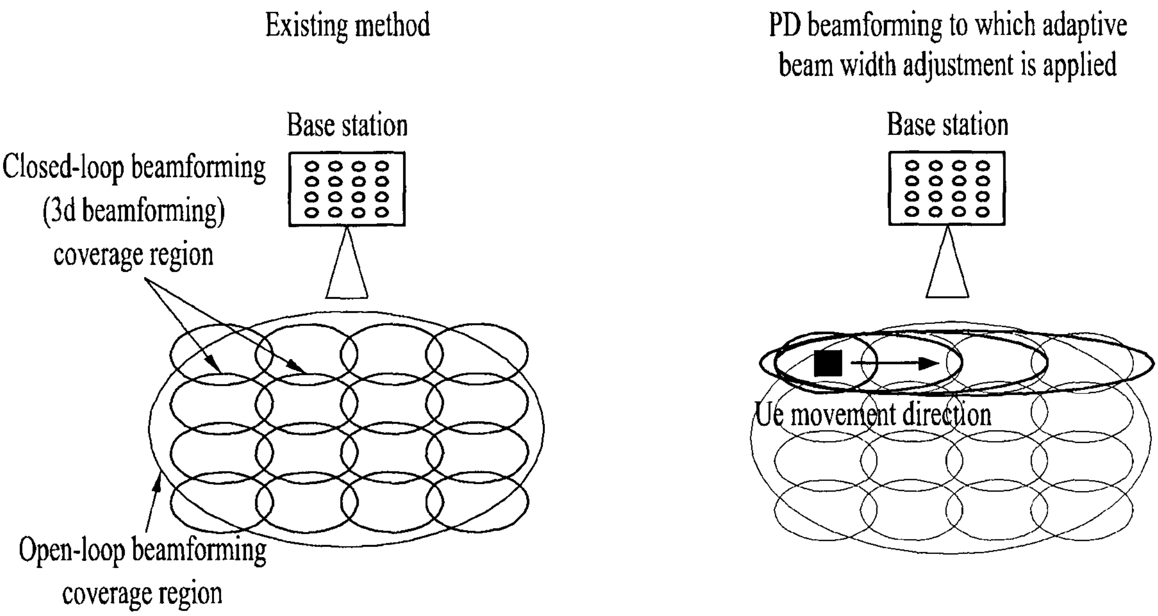
Existing method
PD beamforming to which adaptive beam width adjustment is applied
Base station
Closed-loop beamforming (3d beamforming) coverage region
Base station
Ue movement direction
Open-loop beamforming coverage region

FIG. 14

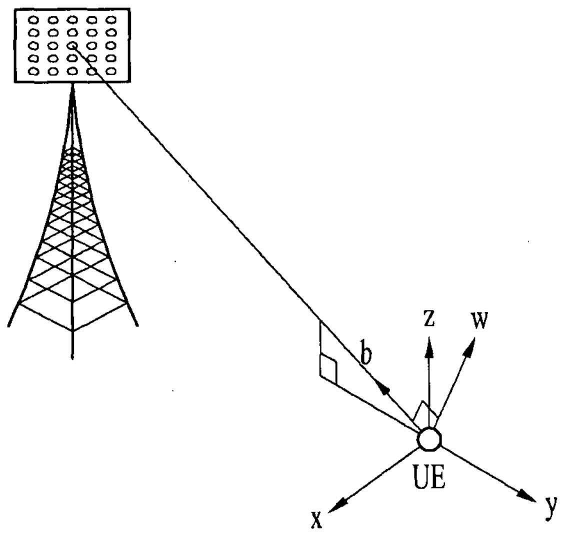
z
w
b
UE
x
y

FIG. 15

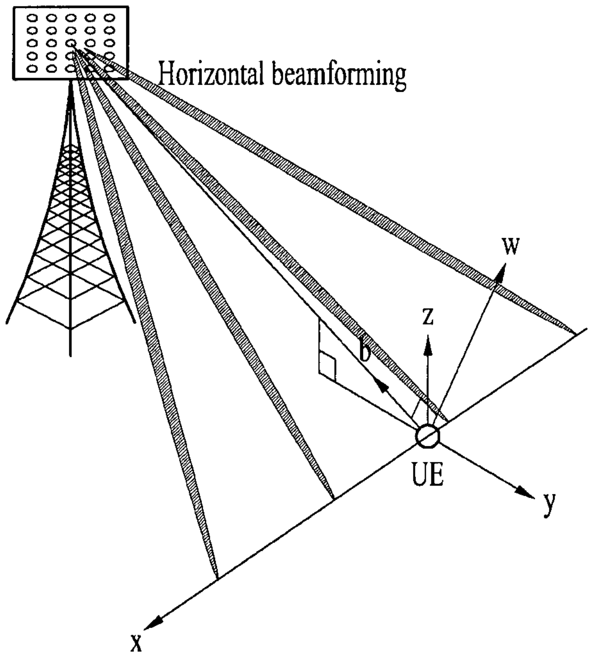
Horizontal beamforming
w
z
b
UE
y
x

FIG. 16

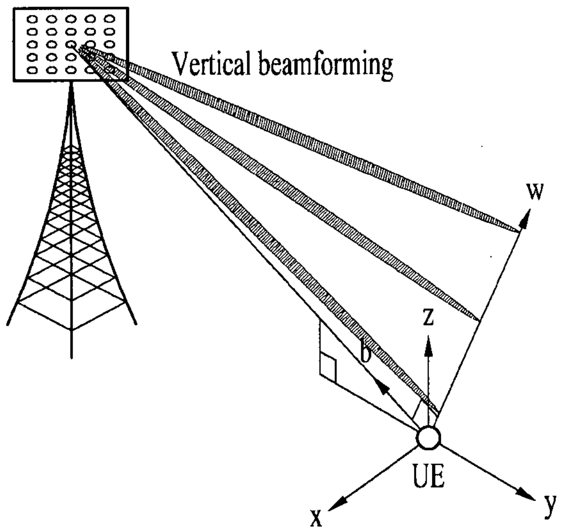
Vertical beamforming
w
z
b
UE
y
x

FIG. 17

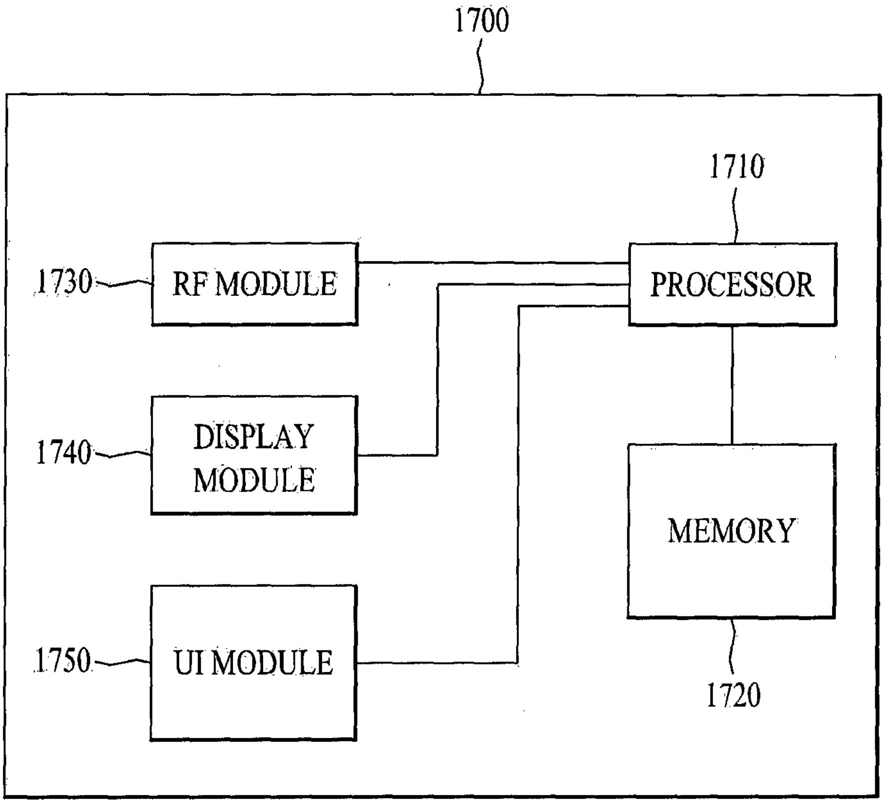
1700
1710
1730
RF MODULE
PROCESSOR
1740
DISPLAY MODULE
MEMORY
1750
UI MODULE
1720

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013022392 A1
- WO 2009041759 A1